# FASCICULE DE BREVET EUROPEEN

(11) **EP 1 923 278 B1**
(45) Date de publication et mention de la délivrance du brevet: **11.01.2012**
(21) Numéro de dépôt: 07120692.4
(22) Date de dépôt: 14.11.2007
(51) Int. Cl.: B60R 22/195, B60R 22/20

(54) **Dispositif de ceinture de sécurité à pré-tension déclenchée par un vérin pyrotechnique**
Sicherheitsgurtvorrichtung mit Vorspannung, die durch eine pyrotechnische Winde ausgelöst wird
Seatbelt device with pretension triggered by an apogee motor initiator

(30) Priorité: 14.11.2006 FR 0654890
(43) Date de publication de la demande: 21.05.2008
(73) Titulaire: SNPE Matériaux Energétiques, 75004 Paris (FR)
(72) Inventeur: Borg, Evrard, 33127 Martignas sur Jalle (FR); Laspesa, Eric, 23 Pl. de la Liberté, 33160 Saint Medard en Jalles (FR); Nadeau, Jean-Paul, 83190 Ollioules (FR)
(74) Mandataire: Barbin le Bourhis, Joël

(56) Documents cités:
- EP-A- 1 431 137
- EP-A- 1 486 697
- EP-A1- 1 350 695
- EP-A1- 1 431 136
- WO-A-2006/044541
- DE-A1- 10 021 382
- DE-A1- 19 957 794
- DE-U1- 29 904 404
- US-A- 5 366 245
- US-A- 6 145 881

## Description

L'invention se rapporte à un dispositif de ceinture de sécurité pour siège de véhicule automobile et plus particulièrement à un dispositif du genre comportant un vérin pyrotechnique déclenché automatiquement en cas de choc et agissant pour resserrer la ceinture de sécurité, notamment la sangle d'épaule.

Lors d'un accident, le corps de l'occupant attaché à son siège par la ceinture de sécurité est retenu par cette dernière. L'étirement de ladite ceinture et les systèmes mécaniques de limitation d'effort absorbent une partie de l'énergie cinétique et permet de réduire l'intensité des forces appliquées à l'occupant. Pour cela, il est souhaitable d'augmenter la durée d'action des forces exercées par la ceinture pendant l'accident. On cherche donc à appliquer ces forces de retenue le plus tôt possible à partir de la détection d'un accident. Pour tendre la ceinture, on a développé des systèmes qui ont pour effet de resserrer la ceinture pour réduire les mouvements de l'occupant, en réponse à la détection d'une décélération brutale provoquée par l'accident.

Le brevet US 6 145 881 décrit un système dans lequel la pré-tension est assurée par l'élévation du guide de la sangle d'épaule. Le mouvement déplace deux segments de la ceinture, celui qui passe sur le thorax de l'occupant et celui qui plonge vers le point d'ancrage bas. Le guide de la sangle d'épaule est monté à l'extrémité d'un vérin pyrotechnique dressé sensiblement verticalement, logé dans la structure du dossier. En cas de collision, le piston, activé par une charge pyrotechnique, déplace le guide de sangle d'épaule vers le haut.

Cependant, le couplage entre le guide de la sangle d'épaule et la tige du vérin présente un certain nombre d'inconvénients. En premier lieu, le fonctionnement du dispositif dérègle le point de réglage en hauteur de la sangle d'épaule par rapport au réglage initial ajusté à la corpulence de l'occupant. Cette modification de l'angle de la sangle d'épaule par rapport à l'occupant est préjudiciable à la bonne application de l'effort de retenue que l'on attend de la ceinture de sécurité.

De plus, le montage du vérin dans le dossier est préjudiciable à la sécurité des occupants des places arrière en raison de la présence d'un élément dur dans le dossier.

Le brevet EP 1 350 695 décrit un dispositif selon le préambule de la revendication 1 dans lequel un coulisseau de sangle d'épaule supplémentaire est réglable par rapport à une partie fixe du véhicule. L'agencement est plus complexe et plus couteux que le précédent.

L'invention permet de surmonter ces inconvénients.

Plus précisément, l'invention concerne un dispositif de ceinture de sécurité pour siège de véhicule automobile, du type à pré-tension déclenchée par un vérin pyrotechnique relié à une sangle d'épaule, du type comportant un guide de sangle d'épaule installé sur une partie fixe du véhicule et situé entre ledit vérin et le siège pour stabiliser l'orientation de ladite sangle d'épaule, caractérisé en ce que ce guide de sangle d'épaule est un élément à positionnement réglable par rapport à ladite partie fixe du véhicule et en ce que ledit vérin pyrotechnique est solidaire dudit guide de sangle d'épaule à positionnement réglable.

Ces caractéristiques ont l'avantage de rendre constante la longueur de ceinture tendue par la course du vérin indépendamment du positionnement réglable de la sangle d'épaule, contrairement à un positionnement fixe du vérin sur le véhicule voyant alors son point de rencontre avec la sangle d'épaule se rapprocher ou s'éloigner en fonction du positionnement du guide de sangle d'épaule réglable. Les caractéristiques de l'invention permettent ainsi d'optimiser la course du vérin, de réduire en conséquence la quantité de masse pyrotechnique qu'il contient et son encombrement.

De préférence, le guide de sangle d'épaule est intégré au châssis du véhicule (et non plus nécessairement au dossier du siège) et situé au voisinage du point haut de la sangle d'épaule.

Selon un autre aspect, l'invention concerne un dispositif de ceinture de sécurité pour siège de véhicule automobile, du type à pré-tension déclenchée par un vérin pyrotechnique relié à une sangle d'épaule, du type comportant un guide de sangle d'épaule installé sur une partie fixe du véhicule et situé entre ledit vérin et le siège pour stabiliser l'orientation de ladite sangle d'épaule, caractérisé en ce que ledit vérin pyrotechnique est associé à un système de multiplication de course pour ladite sangle.

Selon encore un autre aspect, l'invention concerne un dispositif de ceinture de sécurité pour siège de véhicule automobile, du type à pré-tension déclenchée par un vérin pyrotechnique relié à une sangle d'épaule, du type comportant un guide de sangle d'épaule installé sur une partie fixe du véhicule et situé entre ledit vérin et le siège pour stabiliser l'orientation de ladite sangle d'épaule, caractérisé en ce qu'il comporte un système autobloquant intercalé entre ladite sangle et une extrémité mobile dudit vérin pyrotechnique.

L'invention sera mieux comprise et d'autres avantages de celle-ci apparaîtront mieux à la lumière de la description qui va suivre de plusieurs modes de réalisation d'un dispositif de ceinture de sécurité conforme à son principe, donnée uniquement à titre d'exemples et faite en référence aux dessins annexés, dans lesquels :
- les figures 1-1A sont des vues schématiques d'un premier mode de réalisation d'un dispositif de ceinture de sécurité, illustrant son fonctionnement ;
- les figures 2-2A sont des vues schématiques semblables d'un mode de réalisation d'un dispositif de ceinture de sécurité selon l'invention ;
- les figures 3-3A sont des vues schématiques semblables d'un troisième mode de réalisation ;
- les figures 4-4A sont des vues semblables d'un quatrième mode de réalisation ;
- les figures 5-5A sont des vues semblables d'un cinquième mode de réalisation ;
- les figures 6-6A sont des vues semblables d'un sixième mode de réalisation ;
- les figures 7-7A sont des vues semblables d'un septième mode de réalisation ;
- les figures 8-8A sont des vues semblables d'un huitième mode de réalisation ;
- les figures 9-9A sont des vues semblables d'un neuvième mode de réalisation ;
- les figures 10-10A illustrent un dixième mode de réalisation selon l'invention, cumulant les avantages des second et cinquième modes de réalisation ; et
- les figures 11-11A illustrent un onzième mode de réalisation selon l'invention, cumulant les avantages des second et neuvième modes de réalisation.

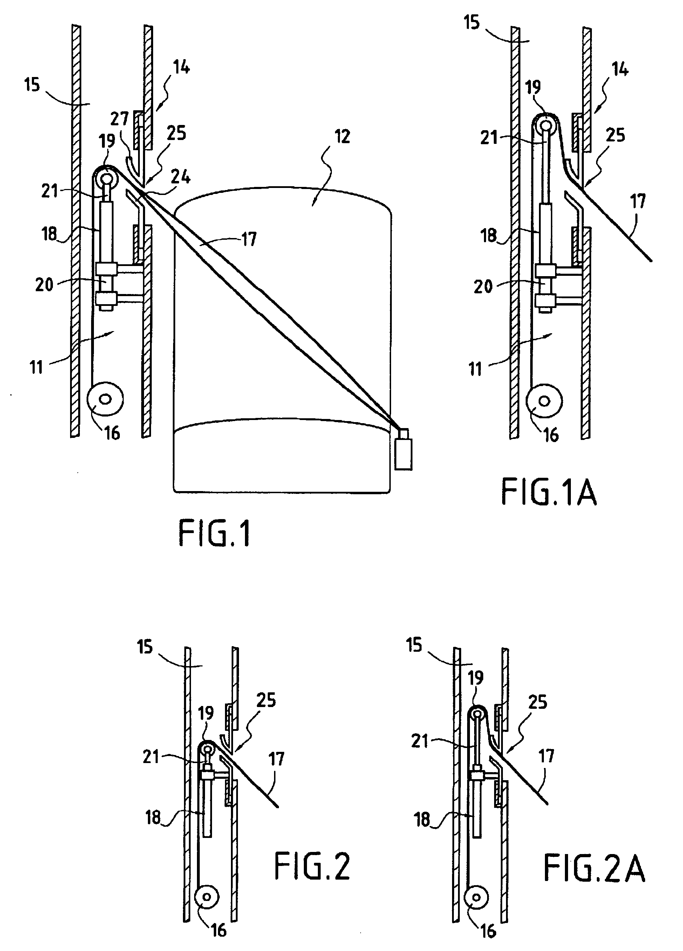

Les modes de réalisation décrits en référence aux figures 1, 1A et 3 à 9A sont utiles à la compréhension de l'invention mais ne font pas partie de l'invention revendiquée.

Sur les figures 1 et 1A, on a représenté un dispositif de ceinture de sécurité 11 pour un siège 12 de véhicule automobile. Ici, le dispositif est intégré à la carrosserie du véhicule, typiquement à l'intérieur d'un montant de portière 14 situé sur le côté du siège, légèrement à l'arrière de celui-ci. Un espace 15 disponible à l'intérieur de ce montant abrite les éléments essentiels du dispositif de ceinture de sécurité. En partie basse, le dispositif comporte un enrouleur 16, classique, équipé d'un système autobloquant, susceptible d'entretenir une légère tension sur une sangle ci-après dénommée sangle d'épaule 17 qui ressort dans l'habitacle en un emplacement situé au voisinage de la partie supérieure du dossier.

Le dispositif 11 est équipé d'un vérin pyrotechnique 18, connu en soi, et une première poulie 19 est montée à une extrémité mobile du vérin pyrotechnique (très généralement à l'extrémité de la tige dudit vérin). La sangle d'épaule 17 coopère avec cette première poulie. Dans l'exemple, ladite sangle s'enroule simplement sur cette poulie. Dans tous les modes de réalisation, une telle poulie pourrait être remplacée par un rouleau ou un simple support de glissement, remplissant la même fonction.

Dans l'exemple des figures 1-1A, le corps de vérin 20 est fermement fixé à la carrosserie, à l'intérieur de l'espace 15 ; il est dressé vers le haut, c'est-à-dire orienté de façon que sa tige 21 portant la poulie 19 se déplace dans l'espace 15 sensiblement verticalement et vers le haut. On sait que le vérin pyrotechnique comporte une charge explosive qui, lorsqu'elle est mise à feu, libère des gaz sous pression pour repousser le piston auquel est rattachée la tige 21. La figure 1 montre la situation normale. La figure 1A montre la situation en cas de décélération brutale (accident) dont la détection engendre l'actionnement du vérin pyrotechnique 18.

Un guide de sangle d'épaule 25 est solidement installé sur le montant de portière 14 ou plus généralement sur une partie fixe du véhicule. Une telle partie fixe pourrait être le siège auquel se rapporte la ceinture de sécurité mais l'installation du système dans la carrosserie (le montant) est très préférable.

Lorsque le vérin pyrotechnique est actionné, l'enrouleur 16 se bloque et une certaine longueur de sangle, correspondant à la course de la tige 21 du vérin, se rétracte à l'intérieur du montant de portière 14, ce qui a pour effet de tirer le torse de l'occupant vers le dossier du siège.

Le guide 25 se situe entre le vérin 18 et le siège 12. Par conséquent, il permet de stabiliser l'orientation de la sangle 16 lors du déclenchement du vérin pyrotechnique, comme cela ressort clairement de la comparaison des figures 1 et 1A.

Le guide 25 comporte au moins une fente 26 pour le passage glissant de la sangle, éventuellement prolongée intérieurement par un tronçon de conduit 27 conformé pour améliorer le glissement de la sangle.

Avantageusement, comme représenté sur les dessins, le guide de sangle d'épaule 25 est un élément à positionnement réglable par rapport à ladite partie fixe du véhicule. On peut ainsi adapter l'orientation de la sangle d'épaule 17 par rapport à l'utilisateur.

Dans la suite de la description, les éléments de structure analogues à ceux des figures 1-1A portent les mêmes références numériques et ne seront pas décrits à nouveau.

Dans l'exemple des figures 2 et 2A, le vérin pyrotechnique 18 est fixé au guide réglable 25 en sorte que le fonctionnement dudit vérin, notamment sa course utile par rapport à la position du guide réglable n'est pas modifié par le réglage de ce dernier.

Dans les modes de réalisation décrits jusqu'à présent, ladite première poulie 19 se situe de préférence au voisinage du guide de sangle d'épaule 17, lorsque le vérin n'est pas actionné, c'est-à-dire tant que le véhicule n'est pas accidenté. Dans ces conditions, les mouvements de la sangle 17 ne sont pas sensiblement freinés par la présence du guide 25.

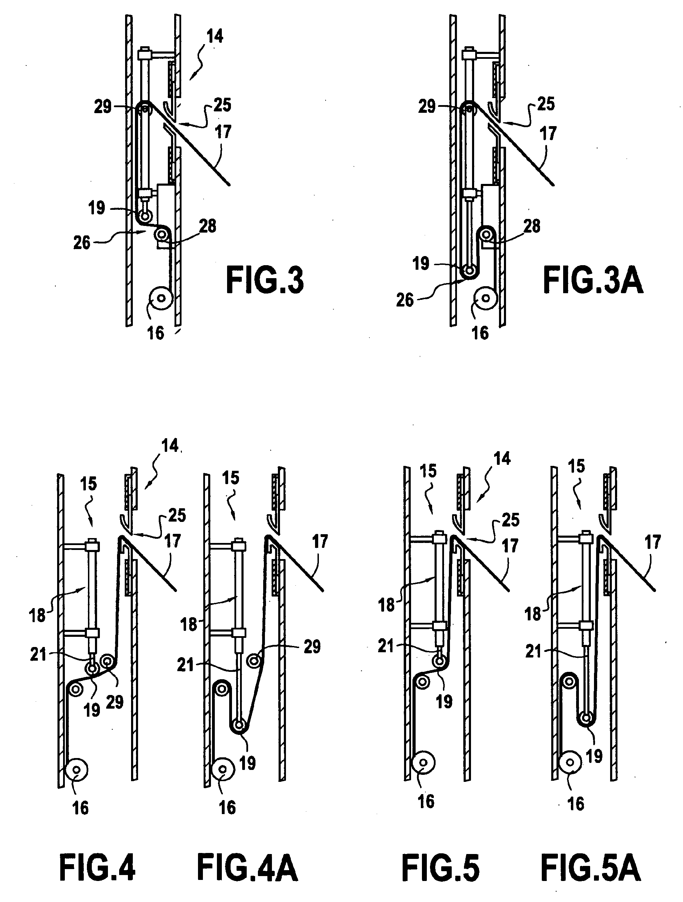

Dans les exemples des figures 3 à 7, le vérin pyrotechnique 18 est associé à un système de multiplication de course 26 pour la sangle d'épaule 17.

Par exemple, le vérin 18 est orienté de façon que son extrémité mobile (l'extrémité de la tige 21 portant ladite première poulie 19) se déplace vers le bas tandis que la sangle coopère à la fois avec ladite première poulie 19 et avec au moins une seconde poulie 27 montée sur une partie fixe du véhicule, ici à l'intérieur de l'espace 15.

Dans l'exemple des figures 3 et 3A, la sangle passe en outre autour d'une troisième poulie 29 située au voisinage du guide 25. Elle est ici montée à l'extrémité fixe du corps de vérin 20. La poulie 27 est montée entre la paroi intérieure du montant de portière 14 qui porte le guide 25 et la trajectoire de ladite première poulie 19. La sangle passe donc successivement autour des poulies 29, 19 et 27 avant de rejoindre l'enrouleur 16. On voit qu'avec cet agencement, la longueur de sangle rétractée au moment du déclenchement du vérin 18 est environ le double de la course du vérin.

Sur le mode de réalisation des figures 4-4A, la troisième poulie 29 est reportée au voisinage de la position de la première poulie, (vérin rétracté) entre cette dernière et le guide 25. La forme de ce dernier est adaptée intérieurement pour faciliter le glissement de la courroie.

Dans le mode de réalisation plus simple des figures 5-5A, ladite troisième poulie est supprimée. Ce mode de réalisation convient lorsque l'espace 15 est réduit.

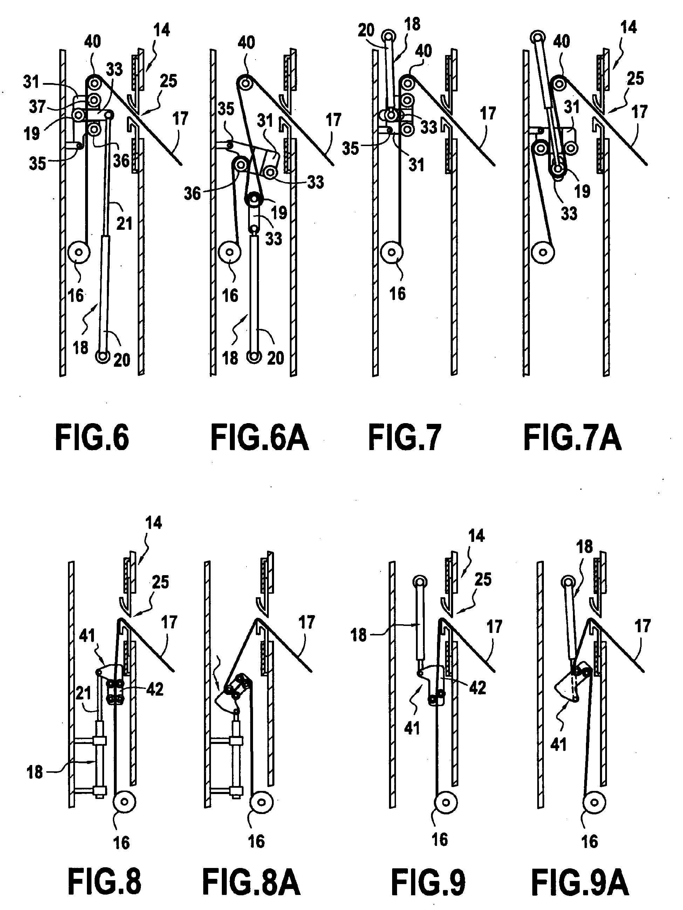

Dans l'exemple des figures 6-6A, le vérin pyrotechnique 18 est couplé à la sangle d'épaule 17 par l'intermédiaire d'un mécanisme comprenant une biellette pivotante 31 et un coulisseau 33 porté par ladite biellette et mobile par rapport à celle-ci. Plus précisément, la biellette est montée pivotante au point d'articulation 35, par rapport à une partie fixe du véhicule tandis que le coulisseau 33 est articulé à l'extrémité de la tige de vérin 21 et porte ladite première poulie 19. La biellette pivotante 31 comporte un guide longitudinal avec deux poulies de guidage 34, 35 de part et d'autre de la position du coulisseau. La sangle 17 passe dans ce guide en regard des poulies 34, 35. Le coulisseau comporte un passage communiquant avec le guide longitudinal et traversé par la sangle 17. La sangle s'enroule autour d'une poulie supérieure 40, passe dans le guide de la biellette, s'engage dans le passage du coulisseau le long de la poulie 19 et passe le long de la poulie inférieure 36 de la biellette 33 avant de rejoindre l'enrouleur 16. Dans cette position normale où le vérin n'est pas actionné, ladite première poulie 19 montée à l'extrémité du coulisseau 33 est située de l'autre côté de la sangle 17 par rapport aux deux autres poulies de la biellette pivotante.

Le vérin pyrotechnique est ici du type tirant ; l'extrémité inférieure du corps de vérin 20 étant articulée à une partie fixe du véhicule, à l'intérieur de l'espace 15.

Lorsque le vérin est actionné, la tige 21 se rétracte en tirant sur le coulisseau 33, ce qui fait basculer la biellette 31 tout en extrayant le coulisseau 33 de celle-ci. Le résultat est illustré à la figure 6A. L'intérêt de cette variante réside dans le fait que, en fonctionnement normal, c'est-à-dire lorsque le véhicule n'est pas accidenté, le couplage entre le vérin pyrotechnique et la sangle 17 est "transparent" c'est-à-dire que la sangle n'est soumise à aucune torsion ou frottement lorsqu'elle traverse la biellette pivotante et le coulisseau.

La variante des figures 7 et 7A est semblable à celle des figures 6 et 6A mais avec un vérin pyrotechnique 18 du type poussant. Dans cette variante, le corps de vérin 20 est monté articulé par son extrémité à un point fixe par rapport au véhicule, à l'intérieur de l'espace 15, au-dessus de la biellette pivotante 31 et du coulisseau 33. Au moment de l'actionnement, le coulisseau est repoussé vers le bas en entraînant le pivotement de la biellette (voir figure 7A).

Dans l'exemple des figures 8-8A, le corps du vérin est fixé au véhicule à l'intérieur de l'espace 15. Il s'agit d'un vérin 18 du type tirant. L'extrémité de la tige de vérin 21 est articulée à un système autobloquant 41 comprenant deux paires de galets entre lesquelles passe la sangle 17. Dans ces conditions, l'enrouleur 16 peut être dépourvu d'un tel système autobloquant. Ce dernier comporte un bras basculant 42 portant les quatre galets et articulé à l'extrémité mobile du vérin pyrotechnique (ici à l'extrémité de la tige).

Les figures 9 et 9A illustrent une variante avec un système autobloquant 41 et un vérin 18 de type poussant. Le vérin est articulé en un point fixe du véhicule situé au-dessus du guide 25. L'extrémité inférieure de la tige 21 est articulée au bras basculant 42.

Avantageusement, ces dispositifs peuvent être réversibles pour prendre en charge la fonction de limitation d'effort de retenue de l'occupant. Pour cela, on peut intégrer dans le vérin un système freinant le retour arrière du vérin, retour provoqué après la phase de tension par l'effet de l'avancée de l'occupant sur la sangle de ceinture. Les brevets EP 1431137 et EP 1486697 décrivent de nombreux systèmes d'amortissement intégrés à des vérins pyrotechniques, qui utilisent l'effet de la recompression des gaz, l'effet d'une soupape de régulation, ou encore un dispositif mécanique dédié.

Dans d'autre mode de fonctionnement, on souhaitera conserver le système de limitation d'effort classique, intégré dans l'enrouleur ou au niveau d'un point d'ancrage de la ceinture. Dans ce cas, on intégrera dans le vérin un système anti retour, avantageusement mécanique, pour le rendre irréversible. Le brevet EP1431136 décrit un système anti retour à billes remontant sur un piston conique qui pourrait être utilisé pour cela.

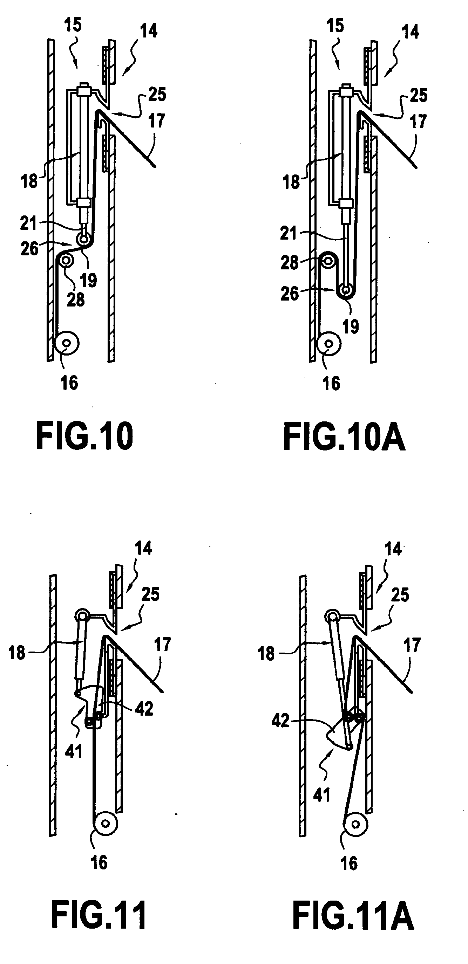

En considérant les figures 10,10A on constate qu'il est possible de combiner les avantages du mode de réalisation des figures 2 et 5, par exemple. Ainsi, le vérin 18 est solidaire du guide 25 à positionnement réglable et le système de multiplication de course 26 pour la sangle 17 est agencé entre la poulie 19 et au moins une seconde poulie 27, ici montée sur une partie fixe du véhicule. La poulie 27 peut avantageusement être solidarisée au vérin, ladite seconde poulie 27 suivant alors aussi, comme le vérin 18, le positionnement réglable dudit guide 25 de sangle. Bien entendu, les variantes des figures 3, 4, 6 et 7 sont aussi adaptables.

Sur les figures 11,11A, on a représenté une combinaison des modes de réalisation des figures 2 et 9, c'est-à-dire que le vérin 18 solidaire du guide 25 est pourvu d'un système autobloquant 41. Il est possible de retenir le système autobloquant de la figure 8.

La combinaison des avantages selon les variantes des figures 2, 3 à 7 et des figures 8 et 9 peut aussi être envisagée.

## Revendications

1. Dispositif de ceinture de sécurité pour siège de véhicule automobile, du type à pré-tension déclenchée par un vérin pyrotechnique (18) relié à une sangle d'épaule (17), du type comportant un guide de sangle d'épaule (25) installé sur une partie fixe du véhicule et situé entre ledit vérin (18) et le siège (12) pour stabiliser l'orientation de ladite sangle d'épaule, ledit guide (25) de sangle d'épaule étant un élément à positionnement réglable par rapport à ladite partie fixe du véhicule, **caractérisé en ce que** ledit vérin pyrotechnique (18) est solidaire dudit guide de sangle d'épaule à positionnement réglable.

2. Dispositif selon la revendication 1, **caractérisé en ce que** ladite sangle d'épaule coopère avec une première poulie (19) montée à une extrémité mobile dudit vérin pyrotechnique.

3. Dispositif selon la revendication 2, **caractérisé en ce que** ladite première poulie (19) se situe au voisinage dudit guide (25) de sangle d'épaule.

4. Dispositif selon l'une quelconque des revendications précédentes, **caractérisé en ce que** ledit vérin pyrotechnique (18) est associé à un système de multiplication de course (26) pour ladite sangle.

5. Dispositif selon l'ensemble des revendications 2 et 4, **caractérisé en ce que** ledit vérin (18) est orienté de façon que son extrémité mobile se déplace vers le bas et **en ce que** ladite sangle (17) coopère à la fois avec ladite première poulie (19) portée par ladite extrémité mobile et avec au moins une seconde poulie (28) montée sur une partie fixe du véhicule ou solidaire dudit vérin.

6. Dispositif selon l'une quelconque des revendications précédentes, **caractérisé en ce que** ledit vérin pyrotechnique (18) est couplé à ladite sangle d'épaule (17) par l'intermédiaire d'un mécanisme comprenant une biellette pivotante (31) et un coulisseau (33) porté par ladite biellette et mobile par rapport à celle-ci.

7. Dispositif selon la revendication 6, **caractérisé en ce que** ladite biellette pivotante (31) comporte un guide longitudinal dans lequel s'engage ladite sangle d'épaule, **en ce que** ledit coulisseau (33) est articulé à ladite extrémité mobile dudit vérin et **en ce qu'**il comporte un passage communiquant avec ledit guide longitudinal et traversé par ladite sangle.

8. Dispositif selon la revendication 1, **caractérisé en ce qu'**il comporte un système autobloquant (41) intercalé entre ladite sangle et une extrémité mobile dudit vérin pyrotechnique.

9. Dispositif selon la revendication 8, **caractérisé en ce que** ledit système autobloquant comporte un bras basculant (42), articulé à l'extrémité mobile dudit vérin pyrotechnique et traversé par ladite sangle (17).

10. Dispositif selon l'une des revendications 7 à 9, **caractérisé en ce que** ledit vérin pyrotechnique est du type tirant.

11. Dispositif selon l'une des revendications 7 à 9, **caractérisé en ce que** ledit vérin pyrotechnique est du type poussant.

12. Dispositif selon les revendications précédentes, **caractérisé en ce que** le vérin intègre un dispositif empêchant tout retour arrière après fonctionnement.

13. Dispositif selon les revendications précédentes, **caractérisé en ce que** le vérin est équipé d'un moyen d'amortissement du mouvement retour, ledit moyen d'amortissement utilisant la pression des gaz ou un système mécanique dédié.

## Claims

1. A safety belt device for an automobile vehicle seat, of the pre-tension type triggered by a pyrotechnic actuator (18) attached to a shoulder strap (17), of the type comprising a shoulder strap guide (25) installed on a fixed part of the vehicle and situated between said actuator (18) and the seat (12) to stabilise the orientation of said shoulder strap, said shoulder strap guide (25) being an adjustable positioning element relative to said fixed part of the vehicle, **characterised in that in that** said pyrotechnic actuator (18) is solidary with said adjustable positioning shoulder strap guide.

2. The device as claimed in Claim 1, **characterised in that** said shoulder strap cooperates with a first pulley (19) mounted at one mobile end of said pyrotechnic actuator.

3. The device as claimed in Claim 2, **characterised in that** said first pulley (19) is located in the vicinity of said shoulder strap guide (25).

4. The device as claimed in any one of the preceding claims, **characterised in that** said pyrotechnic actuator (18) is connected to a path multiplication system (26) for said strap.

5. The device as claimed in all of the preceding claims 2 and 4, **characterised in that** said actuator (18) is oriented such that its mobile end moves down and **in that** said strap (17) cooperates both with said first pulley (19) carried by said mobile end and with at least one second pulley (28) mounted on a fixed part of the vehicle or solid with said actuator.

6. The device as claimed in any one of the preceding claims, **characterised in that** said pyrotechnic actuator (18) is coupled to said shoulder strap (17) by means of a mechanism comprising a pivoting rod (31) and a slide (33) carried by said rod and mobile relative to the latter.

7. The device as claimed in Claim 6, **characterised in that** said pivoting rod (31) comprises a longitudinal guide in which said shoulder strap engages, **in that** said slide (33) is articulated to said mobile end of said actuator and **in that** it comprises a passage communicating with said longitudinal guide and traversed by said strap.

8. The device as claimed in Claim 1, **characterised in that** it comprises an autoblocking system (41) interposed between said strap and a mobile end of said pyrotechnic actuator.

9. The device as claimed in Claim 8, **characterised in that** said autoblocking system comprises a tilting arm (42), articulated to the mobile end of said pyrotechnic actuator and traversed by said strap (17).

10. The device as claimed in any one of Claims 7 to 9, **characterised in that** said pyrotechnic actuator is of the pull type.

11. The device as claimed in any one of Claims 7 to 9, **characterised in that** said pyrotechnic actuator is of the push type.

12. The device as claimed in the preceding claims, **characterised in that** the actuator integrates a device preventing any rearwards return after operation.

13. The device as claimed in the preceding claims, **characterised in that** the actuator is equipped with damping means of the return movement, said damping means utilising the pressure of gas or a dedicated mechanical system.

## Patentansprüche

1. Sicherheitsgurtvorrichtung für einen Kraftfahrzeugsitz, vom Typ mit Vorspannung, die durch einen mit einem Schultergurt (17) verbundenen pyrotechnischen Zylinder (18) ausgelöst wird, vom Typ umfassend eine Schultergurtführung (25), die an einem festen Teil des Fahrzeugs angebracht ist und zwischen dem Zylinder (18) und dem Sitz (12) gelegen ist, um die Ausrichtung des Schultergurts zu stabilisieren, wobei die Schultergurtführung (25) ein Element mit einstellbarer Positionierung gegenüber dem festen Teil des Fahrzeugs ist, **dadurch gekennzeichnet, daß** der pyrotechnische Zylinder (18) mit der Schultergurtführung mit einstellbarer Positionierung fest verbunden ist.

2. Vorrichtung nach Anspruch 1, **dadurch gekennzeichnet, daß** der Schultergurt mit einer ersten Rolle (19) zusammenwirkt, die an einem beweglichen Ende des pyrotechnischen Zylinders angebracht ist.

3. Vorrichtung nach Anspruch 2, **dadurch gekennzeichnet, daß** die erste Rolle (19) in der Nähe der Schultergurtführung (25) gelegen ist.

4. Vorrichtung nach einem der vorhergehenden Ansprüche, **dadurch gekennzeichnet, daß** der pyrotechnische Zylinder (18) einem Hubverstärkungssystem (26) für den Gurt zugeordnet ist.

5. Vorrichtung nach den Ansprüchen 2 und 4, **dadurch gekennzeichnet, daß** der Zylinder (18) derart ausgerichtet ist, daß sein bewegliches Ende sich nach unten bewegt, und daß der Gurt (17) sowohl mit der von dem beweglichen Ende getragenen ersten Rolle (19) als auch mit wenigstens einer zweiten Rolle (28), die an einem festen Teil des Fahrzeugs angebracht oder mit dem Zylinder fest verbunden ist, zusammenwirkt.

6. Vorrichtung nach einem der vorhergehenden Ansprüche, **dadurch gekennzeichnet, daß** der pyrotechnische Zylinder (18) mittels eines Mechanismus, der einen Schwenkarm (31) und einen Schieber (33), welcher von dem Arm getragen und gegenüber diesem beweglich ist, umfaßt, mit dem Schultergurt (17) gekoppelt ist.

7. Vorrichtung nach Anspruch 6, **dadurch gekennzeichnet, daß** der Schwenkarm (31) eine Längsführung umfaßt, in die der Schultergurt eingreift, daß der Schieber (33) an dem beweglichen Ende des Zylinders angelenkt ist und daß er einen Durchgang aufweist, der mit der Längsführung in Verbindung und von dem Gurt durchgriffen ist.

8. Vorrichtung nach Anspruch 1, **dadurch gekennzeichnet, daß** sie ein selbstsperrendes System (41) umfaßt, das zwischen dem Gurt und einem beweglichen Ende des pyrotechnischen Zylinders eingefügt ist.

9. Vorrichtung nach Anspruch 8, **dadurch gekennzeichnet, daß** das selbstsperrende System einen Kipparm (42) umfaßt, der an dem beweglichen Ende des pyrotechnischen Zylinders angelenkt und von dem Gurt (17) durchgriffen ist.

10. Vorrichtung nach einem der Ansprüche 7 bis 9, **dadurch gekennzeichnet, daß** der pyrotechnische Zylinder ziehender Art ist

11. Vorrichtung nach einem der Ansprüche 7 bis 9, **dadurch gekennzeichnet, daß** der pyrotechnische Zylinder schiebender Art ist.

12. Vorrichtung nach den vorhergehenden Ansprüchen, **dadurch gekennzeichnet, daß** der Zylinder eine Vorrichtung enthält, die jeden Rücklauf nach dem Betrieb verhindert.

13. Vorrichtung nach den vorhergehenden Ansprüchen, **dadurch gekennzeichnet, daß** der Zylinder mit einem Mittel zur Dämpfung der Rückbewegung ausgestattet ist, wobei das Dämpfungsmittel den Druck der Gase oder ein speziell ausgelegtes mechanisches System verwendet.
